# EUROPEAN PATENT SPECIFICATION

(11) **EP 2 818 692 B1**
(45) Date of publication and mention of the grant of the patent: **21.06.2017**
(21) Application number: 14155215.8
(22) Date of filing: 14.02.2014
(51) Int. Cl.: H02J 3/38, F03B 13/06

(54) **Pumped storage system**
Pumpspeichersystem
Système de stockage pompé

(30) Priority: 26.06.2013 JP 2013134275
(43) Date of publication of application: 31.12.2014
(73) Proprietor: Hitachi Mitsubishi Hydro Corporation, Minato-ku Tokyo 108-0014 (JP)
(72) Inventor: Nagura, Osamu, Tokyo, Tokyo 108-0014 (JP)
(74) Representative: Zech, Stefan Markus

(56) References cited:
- US-A- 4 816 696
- US-A- 5 585 708
- US-A1- 2009 302 607

## Description

### FIELD OF THE INVENTION

The present invention relates to a pumped storage system.

### BACKGROUND ART

In a pumped storage system, an upper reservoir and a lower reservoir are connected through a water passage, and water that flows from the upper reservoir to the lower reservoir rotates a pump turbine to rotate a rotor of a generator motor connected to the pump turbine, thereby generating power during the day or the like when the amount of power consumption is high. In addition, in a state where there is no need to generate power, such as during the night in which the amount of power consumption is low, the generator motor is driven by receiving power from a system to rotate the pump turbine, thereby pumping water in the lower reservoir to the upper reservoir. As such, the pumped storage system is utilized as a kind of an energy storage apparatus.

In a power generation operation, the power generation amount is controlled depending on a state of a grid. For example, the power generation amount is increased in a state where electricity consumption by consumers is high, while the power generation amount is decreased in a state where the electricity consumption is low. The power generation amount is adjusted by controlling opening of a guide vane which adjusts the amount of water flowing through the pump turbine. In a pumping operation, on the other hand, the guide vane opening is controlled depending on a difference in a water level between the upper reservoir and the lower reservoir, for the purpose of efficient pumping (for example, refer to Japanese Patent Application Publication JP-2003-166461

Further examples of pumped storage systems and control devices for related electrical equipment are shown in US 2009/302607 A1 or US 5 585 708 A.

### SUMMARY OF THE INVENTION

In the pumping operation by the pumped storage system according to the related art, as described above, the guide vane opening is controlled depending on the difference in the water level between the upper reservoir and the lower reservoir, for the purpose of efficient pumping. In this case, a state of the grid is not taken into consideration. That is, supply and demand adjustment is impossible during the pumping operation, which prevents grid stabilization. In order to achieve a more stable grid, it is desirable to perform an operation in consideration of the state of the grid during the pumping operation to contribute to the supply and demand adjustment.

The present invention has been made taking the foregoing circumstances into consideration, and an object thereof is to provide a pumped storage system that can achieve a more stable grid.

A pumped storage system according to the present invention has: a reversible pump turbine; a synchronous motor generator directly coupled to a runner shaft of the reversible pump turbine; and a frequency converter. The frequency converter has: a first power conversion unit performing bidirectional AC/DC conversion and connected to a grid; a second power conversion unit performing bidirectional AC/DC conversion and connected to the synchronous motor generator; and a storage battery connected between the first power conversion unit and the second power conversion unit. The pumped storage system further has: a governor configured to adjust a guide vane opening of the reversible pump turbine; and a control device configured to control the first power conversion unit, the second power conversion unit and the governor. The control device has a first frequency converter control unit configured to control the first power conversion unit based on a reactive power command and an active power command that are input externally.

The pumped storage system according to the present invention exhibits effects of increasing following capability with respect to a load variation, enhancing stability of the grid as compared with the related art, and contributing to supply and demand adjustment of the grid even during the pumping operation.

### BRIEF DESCRIPTION OF THE DRAWINGS

FIG. 1 is a schematic diagram illustrating a pumped storage system; and
FIG. 2 is a diagram illustrating a configuration example of a pumped storage system according to an embodiment of the present invention.

### DETAILED DESCRIPTION OF EMBODIMENTS

Hereinafter, an embodiment of a pumped storage system according to the present invention will be described in detail with reference to the attached drawings. It should be noted that the invention is not limited to the embodiment.

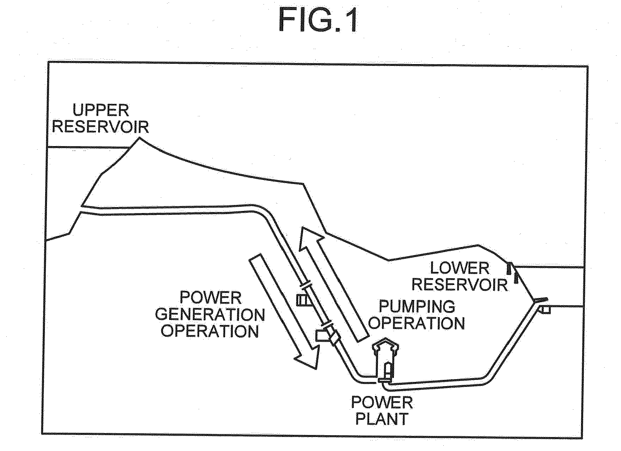

FIG. 1 is a schematic diagram of a pumped storage system. As illustrated, in the pumped storage system, an upper reservoir and a lower reservoir are connected through a water passage, and a power plant is provided on the water passage. By releasing water from the upper reservoir to the lower reservoir, a pump turbine installed in the power plant is rotated and a generator connected to the pump turbine is driven to generate power (power generation operation). In addition, by using the generator as a motor and driving the motor, the pump turbine is rotated in a reverse direction to that in the power generation operation to pump-up water in the lower reservoir to the upper reservoir (pumping operation).

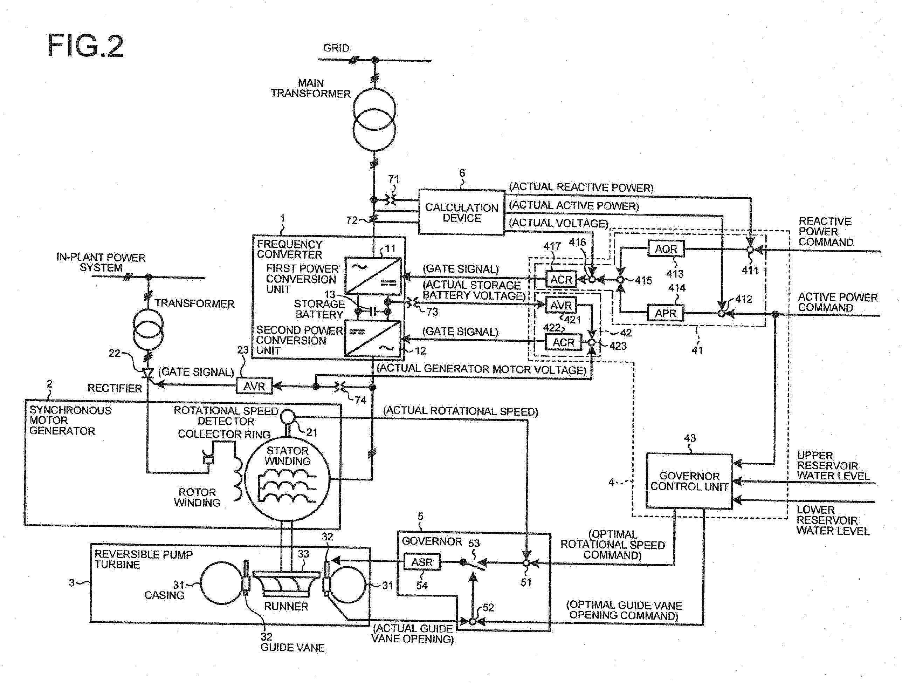

FIG. 2 is a diagram illustrating a configuration example of the pumped storage system according to an embodiment of the present invention. As illustrated, the pumped storage system according to the present embodiment includes, as main constituent elements, a frequency converter 1, a synchronous motor generator 2, a reversible pump turbine 3, a control device 4, a governor 5, and a calculation device 6.

In the power generation operation, the frequency converter 1 receives, as an input, an AC (alternating current) voltage generated by the synchronous motor generator 2 and converts a frequency of the AC voltage to coincide with a frequency on the grid side. In the pumping operation, on the other hand, the frequency converter 1 receives, as an input, power supply from the grid and generates driving power for driving the synchronous motor generator 2 as a motor. The frequency converter 1 includes: a first power conversion unit 11 performing bidirectional AC/DC conversion and installed on the side of a main transformer (the grid); a second power conversion unit 12 performing bidirectional AC/DC conversion and installed on the side of the synchronous motor generator 2; and a storage battery 13 installed between the first power conversion unit 11 and the second power conversion unit 12. The second power conversion unit 12 is connected to a stator winding of the synchronous motor generator 2.

The synchronous motor generator 2 has a rotor that is directly coupled to a runner shaft of the reversible pump turbine 3. In the power generation operation, the reversible pump turbine 3 is rotated by water energy, and accordingly the rotor of the synchronous motor generator 2 is rotated to generate power. In the pumping operation, the synchronous motor generator 2 is supplied with the driving power from the frequency converter 1 to operate as a motor and rotates the reversible pump turbine 3 to pump-up water. The synchronous motor generator 2 includes a rotational speed detector 21 which detects a rotational speed of the rotor.

A direct current supplied to a rotor winding of the synchronous motor generator 2 is generated by a rectifier 22 which rectifies AC power supplied from an in-plant grid. An AVR (Automatic Voltage Regulator: automatic voltage control device) 23 is connected to the rectifier 22. The AVR 23 functions as a rectifier control unit that generates a gate signal as a control signal for the rectifier 22.

The reversible pump turbine 3 has a casing 31, a runner 33, and a guide vane 32 disposed between the casing 31 and the runner 33. The casing 31 is connected to the upper reservoir. In the power generation operation, water flows toward the runner 33 through the guide vane 32. In the pumping operation, water flows in the reverse direction. By changing opening of the guide vane 32, the amount of water that flows from the casing 31 to the runner 33 or flows in the reverse direction is changed accordingly. That is, by adjusting the opening of the guide vane 32, it is possible to adjust the power generation amount in the power generation operation and the amount of pumped water in the pumping operation, respectively. It should be noted that in the pumping operation, the opening of the guide vane 32 is adjusted and optimized depending on an operation state of the synchronous motor generator 2, in order to minimize loss.

The control device 4 is an apparatus which controls the frequency converter 1 and the governor 5. The control device 4 generates gate signals for the frequency converter 1 and command signals (an optimal rotational speed command and an optimal guide vane opening command) for the governor 5, based on externally-input information such as a reactive power command, an active power command, an upper reservoir water level, and a lower reservoir water level. The gate signals are used for controlling the first power conversion unit 11 and the second power conversion unit 12 in the frequency converter 1. The gate signal for the first power conversion unit 11 is generated by a first frequency converter control unit 41 based on the reactive power command, the active power command, and information (such as a voltage on the grid side of the frequency converter 1, actual active power and actual reactive power calculated from the voltage and current on the grid side of the frequency converter 1) input from the calculation device 6. The gate signal for the second power conversion unit 12 is generated by a second frequency converter control unit 42 based on a voltage between both ends of the storage battery 13 and a voltage on the side of the synchronous motor generator 2 of the frequency converter 1. Here, the voltage between both ends of the storage battery 13 is detected by a voltage transformer 73. The voltage on the side of the synchronous motor generator 2 of the frequency converter 1 is detected by a voltage transformer 74. The command signals for the governor 5 are generated by a governor control unit 43 based on the active power command, the upper reservoir water level, and the lower reservoir water level.

The first frequency converter control unit 41 includes comparators 411 and 412, an AQR (Automatic Q Regulator: automatic reactive power control device) 413, an APR (Automatic P Regulator: automatic active power control device) 414, calculators 415 and 416, and an ACR (Automatic Current Regulator: automatic current control device) 417. The comparator 411 compares the externally-input reactive power command value with the actual reactive power input from the calculation device 6 to calculate a difference (deviation) between the two inputs. The comparator 412 compares the externally-input active power command value with the actual active power input from the calculation device 6 to calculate a difference (deviation) between the two inputs. The AQR 413 determines an adjustment amount of the reactive power based on the deviation in the reactive power that is input from the comparator 411. The determined adjustment amount is expressed as a vector and is output to the calculator 415. The APR 414 determines an adjustment amount of the active power based on the deviation in the active power that is input from the comparator 412. The determined adjustment amount is expressed as a vector and is output to the calculator 415. The calculator 415 adds the input adjustment amount of the reactive power and the input adjustment amount of the active power. The calculator 416 further adds an actual voltage input from the calculation device 6 to the addition result output from the calculator 415. The ACR 417 generates the gate signal for the first power conversion unit 11 based on the addition result output from the calculator 416.

The second frequency converter control unit 42 includes an AVR 421, an ACR 422, and a calculator 423. The AVR 421 retains a target value of the voltage between both ends of the storage battery 13, and calculates a difference between the target value and the voltage (actual storage battery voltage) detected by the voltage transformer 73. The calculator 423 adds the calculation result output from the AVR 421 and the voltage (actual generator motor voltage) detected by the voltage transformer 74. The ACR 422 generates the gate signal for the second power conversion unit 12 based on the addition result output from the calculator 423.

It should be noted that the configuration of the first frequency converter control unit 41 and the second frequency converter control unit 42 shown in FIG. 2 is only an example. Any configuration is possible as long as the operations during the power generation operation and the pumping operation, which will be described later, can be realized.

In the power generation operation, the governor 5 adjusts the opening of the guide vane 32 of the reversible pump turbine 3 to control a rotational speed of the synchronous motor generator 2 (a rotational speed of the rotor). In the pumping operation, the governor 5 adjusts the opening of the guide vane 32 of the reversible pump turbine 3 to control the amount of pumped water. In a case where the governor control unit 43 of the control device 4 gives an optimal rotational speed command value to the governor 5, the governor 5 adjusts the opening of the guide vane 32 such that an actual rotational speed detected by the rotational speed detector 21 of the synchronous motor generator 2 coincides with the optimal rotational speed command value. In a case where the governor control unit 43 of the control device 4 gives an optimal guide vane opening command value to the governor 5, the governor 5 adjusts the opening of the guide vane 32 such that an actual guide vane opening fed back from the reversible pump turbine 3 coincides with the optimal guide vane opening command value.

The governor 5 includes comparators 51 and 52, a switch 53, and an ASR (Automatic Speed Regulator: automatic rotational speed control device) 54. The comparator 51 compares the optimal rotational speed command input from the governor control unit 43 with the actual rotational speed input from the rotational speed detector 21 to calculate a difference (deviation) between the two inputs. The comparator 52 compares the optimal guide vane opening command input from the governor control unit 43 with the actual guide vane opening input from the reversible pump turbine 3 to calculate a difference (deviation) between the two inputs. The switch 53 selects one of the deviation calculated by the comparator 51 and the deviation calculated by the comparator 52, and outputs the selected deviation to the ASR 54. More specifically, the switch 53 selects and outputs the deviation calculated by the comparator 51 in the case of the power generation operation, and selects and outputs the deviation calculated by the comparator 52 in the case of the pumping operation. Whether the current operation mode is the power generation operation or the pumping operation is determined, for example, by monitoring a polarity of the active power command value input to the control device 4. The ASR 54 controls the opening of the guide vane 32 based on the deviation output from the switch 53. It should be noted that the configuration of the governor 5 shown in FIG. 2 is only an example. Any configuration is possible as long as the operations during the power generation operation and the pumping operation, which will be described later, can be realized.

The calculation device 6 calculates the active power and the reactive power based on the voltage and current on the grid side of the frequency converter 1, that is, a voltage value detected by a voltage transformer 71 and a current value detected by a current transformer 72. The calculation result is output to the first frequency converter control unit 41 of the control device 4. In addition, the voltage value detected by the voltage transformer 71 also is output to the first frequency converter control unit 41.

Next, operations of the pumped storage system in both cases of the power generation operation and the pumping operation will be described.

### <Operation in Power Generation Operation>

In a case of performing the power generation operation, the value of the active power command input to the control device 4 is positive (+). When the active power command value with the positive polarity is input, the governor control unit 43 of the control device 4 determines that the power generation operation is performed. In this case, the governor control unit 43 refers to three input values including the active power command value, the upper reservoir water level and the lower reservoir water level, and outputs, to the governor 5, an optimal rotational speed command value corresponding to the three input values. Here, the optimal rotational speed command value is uniquely derived from the three input values according to hydraulic characteristics and the like of the reversible pump turbine 3, but the determination method thereof is not particularly specified. For example, a correspondence table of the three input values and an output value (optimal rotational speed command value) is generated in advance and stored in the governor control unit 43, and the optimal rotational speed command value is determined by referring to the stored correspondence table. It should be noted that an optimal guide vane opening command is not output in the case of the power generation operation.

When the optimal rotational speed command value is input, the governor 5 compares the optimal rotational speed command value with the actual rotational speed input from the rotational speed detector 21 of the synchronous motor generator 2, and changes the opening of the guide vane 32 such that the actual rotational speed coincides with the command value (the optimal rotational speed command value), that is, the difference (deviation) between the two input values becomes zero. For example, in a case where the actual rotational speed is lower than the command value, the governor 5 instructs the guide vane 32 to increase the opening so as to increase the amount of water flowing into the runner 33. On the other hand, in a case where the actual rotational speed is higher than the command value, the governor 5 instructs the guide vane 32 to decrease the opening so as to reduce the amount of water flowing into the runner 33.

When the active power command value having the positive polarity is input, the first frequency converter control unit 41 controls the first power conversion unit 11 (generates the gate signal) such that the active power and the reactive power calculated by the calculation device 6 respectively coincide with the active power command value and the reactive power command value. By generating a desired power by controlling the first power conversion unit 11 provided on the grid side, it is possible to improve following capability with respect to a load variation.

The second frequency converter control unit 42 may control the second power conversion unit 12 based on the respective voltage values detected by the voltage transformers 73 and 74 such that the voltage value detected by the voltage transformer 73 (i.e. the terminal voltage of the storage battery 13) is maintained at a predetermined constant value. In the case where the polarity of the active power command value is positive, the power generation operation is performed and the first power conversion unit 11 is operated to supply power to the grid side. Therefore, the terminal voltage of the storage battery 13 is reduced (energy stored in the storage battery 13 is consumed). For this reason, the second frequency converter control unit 42 controls the second power conversion unit 12 to charge the storage battery 13. When the terminal voltage of the storage battery 13 is controlled to always be a constant value, the input voltage to the first power conversion unit 11 also becomes constant, and thus the operation of controlling the first power conversion unit 11 by the first frequency converter control unit 41 is simplified. As a result, following capability with respect to the active power command value and the reactive power command value is further enhanced, resulting in stabilization of the grid.

In addition, the AVR 23, which generates the gate signal for the rectifier 22 that generates the direct current supplied to the rotor winding of the synchronous motor generator 2, monitors the voltage detected by the voltage transformer 74 (i.e. the output voltage of the synchronous motor generator 2 to the second power conversion unit 12), and generates the gate signal for the rectifier 22 such that an effective value of the voltage detected by the voltage transformer 74 is maintained at a constant value, for example. When the voltage value detected by the voltage transformer 74 is controlled to be constant, the input voltage to the second power conversion unit 12 also becomes constant, and thus the operation of controlling the second power conversion unit 12 by the second frequency converter control unit 42 is simplified.

### <Operation in Pumping Operation>

In a case of performing the pumping operation, the value of the active power command input to the control device 4 is negative (-). When the active power command value with the negative polarity is input, the governor control unit 43 of the control device determines that the pumping operation is performed. In this case, the governor control unit 43 refers to three input values including the active power command value, the upper reservoir water level and the lower reservoir water level, and outputs, to the governor 5, an optimal guide vane opening command value corresponding to the three input values. Here, the optimal guide vane opening command value is uniquely derived from the three input values according to hydraulic characteristics and the like of the reversible pump turbine 3, but the determination method thereof is not particularly specified. For example, a correspondence table of the three input values and an output value (optimal guide vane opening command value) is generated in advance and stored in the governor control unit 43, and the optimal guide vane opening command value is determined by referring to the stored correspondence table. It should be noted that an optimal rotational speed command is not output in the case of the pumping operation.

When the optimal guide vane opening command value is input, the governor 5 compares the optimal guide vane opening command value with the actual guide vane opening fed back from a sensor or the like (not illustrated) mounted to the guide vane 32 of the reversible pump turbine 3, and changes the opening of the guide vane 32 such that the actual guide vane opening coincides with the command value (the optimal guide vane opening command value), that is, the difference (deviation) between the two input values becomes zero. For example, in a case where the actual guide vane opening is smaller than the command value, the governor 5 instructs the guide vane 32 to increase the opening. On the other hand, in a case where the actual guide vane opening is larger than the command value, the governor 5 instructs the guide vane 32 to decrease the opening.

When the active power command value having the negative polarity is input, the first frequency converter control unit 41 controls the first power conversion unit 11 (generates the gate signal) such that the active power and the reactive power calculated by the calculation device 6 respectively coincide with the active power command value and the reactive power command value. By consuming the power supplied from the grid by controlling the first power conversion unit 11 provided on the grid side, it is possible to contribute to supply and demand adjustment of the grid (i.e. stabilization of the grid) even in the case of the pumping operation.

The second frequency converter control unit 42 may control the second power conversion unit 12 based on the respective voltage values detected by the voltage transformers 73 and 74 such that the voltage value detected by the voltage transformer 73 (i.e. the terminal voltage of the storage battery 13) is maintained at a predetermined constant value. In the case where the polarity of the active power command value is negative, the pumping operation is performed and the first power conversion unit 11 is operated to receive power from the grid side (to consume the power). Therefore, the terminal voltage of the storage battery 13 is increased (energy is stored in the storage battery 13). For this reason, the second frequency converter control unit 42 controls the second power conversion unit 12 to consume the energy stored in the storage battery 13, that is, to generate the driving power of the synchronous motor generator 2. When the terminal voltage of the storage battery 13 is controlled to always be a constant value, the first power conversion unit 11 can be continuously supplied with the power from the grid, and it is thus possible to achieve power consumption (taking the power supply from the grid) that follows the active power command value and the reactive power command value. It is therefore possible to contribute to the stabilization of the grid even in the case of the pumping operation. The terminal voltage of the storage battery 13 may be controlled to have the same value (constant value) as that in the power generation operation or may be controlled to have a constant value different from that in the power generation operation. For example, since power is supplied to the grid side during the power generation operation, the voltage of the storage battery 13 may be controlled to be constant at a high level to increase the amount of energy (electric charge) stored in the storage battery 13. Since power is supplied from the grid side during the pumping operation, the voltage of the storage battery 13 may be controlled to be constant at a low level to reduce the amount of energy stored in the storage battery 13.

In addition, the AVR 23, which generates the gate signal for the rectifier 22 that generates the direct current supplied to the rotor winding of the synchronous motor generator 2, monitors the voltage detected by the voltage transformer 74 (i.e. the input voltage of the synchronous motor generator 2 from the second power conversion unit 12), and generates the gate signal for the rectifier 22 such that an effective value of the voltage detected by the voltage transformer 74 is maintained at a constant value, for example.

As described above, according to the pumped storage system of the present embodiment, the first power conversion unit on the grid side among the two power conversion units (the first power conversion unit and the second power conversion unit) included in the frequency converter is configured to operate in accordance with the reactive power command and the active power command, adjust the amount of power supplied to the grid during the power generation operation, and adjust the amount of power received from the grid during the pumping operation. As a result, the following capability with respect to a load variation (a voltage variation of the grid) can be improved, and thus the stability of the grid can be improved as compared with the related art. Furthermore, it is possible to contribute to supply and demand adjustment of the grid (stabilization of the grid) even in the case of the pumping operation.

Moreover, the second power conversion unit performs the power conversion operation such that the voltage of the storage battery provided between the two power conversion units is maintained at a constant value. As a result, the controlling of the power conversion operation by the first power conversion unit is simplified, and thus following capability with respect to the active power command and the reactive power command is enhanced. In other words, the stability of the grid can be further improved.

## Claims

1. A pumped storage system comprising:
a reversible pump turbine (3);
a synchronous motor generator (2) directly coupled to a runner shaft of the reversible pump turbine (3);
a frequency converter (1) comprising:
a first power conversion unit (11) performing bidirectional AC/DC conversion and connected to a grid;
a second power conversion unit (12) performing bidirectional AC/DC conversion and connected to the synchronous motor generator (2); and
a storage battery (13) connected between the first power conversion unit (11) and the second power conversion unit (12);
a calculation device (6) configured to calculate an actual reactive power and an actual active power based on a current and a voltage between the first power conversion unit (11) and the grid;
a governor (5) configured to adjust a guide vane opening of the reversible pump turbine (3); and
a control device (4) configured to control the first power conversion unit (11), the second power conversion unit (12) and the governor (5), depending on a power generation operation and a pumping operation,
wherein the control device (4) comprises:
a first frequency converter control unit (41) configured to control, in each of the power generation operation and the pumping operation, the first power conversion unit (11) such that the calculated actual reactive power and actual active power respectively coincide with a reactive power command and an active power command that are input externally; and
a second frequency converter control unit (42) configured to control, in each of the power generation operation and the pumping operation, the second power conversion unit (12) such that a voltage of the storage battery (13) is maintained at a constant value.

2. The pumped storage system according to claim 1, wherein the control device (4) further comprises a governor control unit (43),
wherein in the power generation operation, the governor control unit (43) gives the governor (5) a rotational speed of a rotor of the synchronous motor generator (2) and the governor (5) adjusts the guide vane opening such that the given rotational speed is achieved, and
wherein in the pumping operation, the governor control unit gives the governor (5) a guide vane opening and the governor (5) adjusts the guide vane opening to coincide with the given guide vane opening.

3. The pumped storage system according to claim 1 or 2, further comprising:
a rectifier (22) configured to generate a direct current supplied to a rotor winding of the synchronous motor generator (2); and
a rectifier control unit (23) configured to control the rectifier (22) such that an effective value of an alternating-current voltage between the synchronous motor generator (2) and the second power conversion unit (12) is maintained at a constant value.

## Patentansprüche

1. Pumpspeichersystem, umfassend:
eine umschaltbare Pumpturbine (3);
einen Synchronmotorgenerator (2), der direkt an eine Laufradwelle der umschaltbaren Pumpturbine (3) angeschlossen ist;
einen Frequenzwandler (1), umfassend:
eine erste Leistungsumwandlungseinheit (11), die eine bidirektionale Wechselstrom/Gleichstrom-Umwandlung durchführt und auf ein Netz aufgeschaltet ist;
eine zweite Leistungsumwandlungseinheit (12), die eine bidirektionale Wechselstrom/Gleichstrom-Umwandlung durchführt und auf den Synchronmotorgenerator (2) aufgeschaltet ist; und
eine Speicherbatterie (13), die zwischen der ersten Leistungsumwandlungseinheit (11) und der zweiten Leistungsumwandlungseinheit (12) zwischengeschaltet ist;
eine Recheneinrichtung (6), die dazu ausgelegt ist, eine tatsächliche Blindleistung und eine tatsächliche Wirkleistung auf Grundlage eines Stroms und einer Spannung zwischen der ersten Leistungsumwandlungseinheit (11) und dem Netz zu berechnen;
einen Regler (5), der dazu ausgelegt ist, eine Leitschaufelöffnung der umschaltbaren Pumpturbine (3) anzupassen; und
eine Steuervorrichtung (4), die dazu ausgelegt ist, die erste Leistungsumwandlungseinheit (11), die zweite Leistungsumwandlungseinheit (12) und den Regler (5) in Abhängigkeit von einem Energieerzeugungsbetrieb und einem Pumpbetrieb zu steuern,
wobei die Steuervorrichtung (4) umfasst:
eine erste Frequenzwandlersteuereinheit (41), die dazu ausgelegt ist, in jeweils dem Energieerzeugungsbetrieb und dem Pumpbetrieb die erste Leistungsumwandlungseinheit (11) so zu steuern, dass die berechnete tatsächliche Belindleistung und die tatsächliche Wirkleistung mit einem Blindleistungsbefehl bzw. einem Wirkleistungsbefehl übereinstimmen, die extern eingegeben werden; und
eine zweite Frequenzwandlersteuereinheit (42), die dazu ausgelegt ist, in jeweils dem Energieerzeugungsbetrieb und dem Pumpbetrieb die zweite Leistungsumwandlungseinheit (12) so zu steuern, dass eine Spannung der Speicherbatterie (13) auf einem konstanten Wert gehalten wird.

2. Pumpspeichersystem nach Anspruch 1, wobei die Steuervorrichtung (4) darüber hinaus eine Reglersteuereinheit (43) umfasst,
wobei im Energieerzeugungsbetrieb die Reglersteuereinheit (43) dem Regler (5) eine Drehzahl eines Rotors des Synchronmotorgenerators (2) mitteilt und der Regler (5) die Leitschaufelöffnung so anpasst, dass die mitgeteilte Drehzahl erreicht wird, und
wobei im Pumpbetrieb die Reglersteuereinheit dem Regler (5) eine Leitschaufelöffnung mitteilt und der Regler (5) die Leitschaufelöffnung anpasst, damit sie mit der mitgeteilten Leitschaufelöffnung übereinstimmt.

3. Pumpspeichersystem nach Anspruch 1 oder 2, darüber hinaus umfassend:
einen Gleichrichter (22), der dazu ausgelegt ist, einen Gleichstrom zu erzeugen, der einer Rotorwicklung des Synchronmotorgenerators (2) zugeführt wird; und
eine Gleichrichtersteuereinheit (23), die dazu ausgelegt ist, den Gleichrichter (22) so zu steuern, dass ein effektiver Wert einer Wechselspannung zwischen dem Synchronmotorgenerator (2) und der zweiten Leistungsumwandlungseinheit (12) auf einem konstanten Wert gehalten wird.

## Revendications

1. Système de stockage pompé comprenant :
une pompe-turbine réversible (3) ;
un générateur à moteur synchrone (2) directement couplé à un arbre d'entraînement de la pompe-turbine réversible (3) ;
un convertisseur de fréquence (1) comprenant :
une première unité de conversion de puissance (11) effectuant une conversion CA/CC bidirectionnelle et connectée à un réseau ;
une deuxième unité de conversion de puissance (12) effectuant une conversion CA/CC bidirectionnelle et connectée au générateur à moteur synchrone (2) ; et
une batterie de stockage (13) connectée entre la première unité de conversion de puissance (11) et la deuxième unité de conversion de puissance (12) ;
un dispositif de calcul (6) configuré pour calculer une puissance réactive réelle et une puissance active réelle sur la base d'un courant et d'une tension entre la première unité de conversion de puissance (11) et le réseau ;
un régulateur (5) configuré pour régler une ouverture d'aubes directrices de la pompe-turbine réversible (3) ; et
un dispositif de commande (4) configuré pour commander la première unité de conversion de puissance (11), la deuxième unité de conversion de puissance (12) et le régulateur (5), en fonction d'une opération de génération de puissance et d'une opération de pompage,
sachant que le dispositif de commande (4) comprend :
une première unité de commande de convertisseur de fréquence (41) configurée pour commander, dans chacune de l'opération de génération de puissance et de l'opération de pompage, la première unité de conversion de puissance (11) de telle sorte que la puissance réactive réelle et la puissance active réelle calculées coïncident respectivement avec une consigne de puissance réactive et une consigne de puissance active qui sont entrées par voie externe ; et
une deuxième unité de commande de convertisseur de fréquence (42) configurée pour commander, dans chacune de l'opération de génération de puissance et de l'opération de pompage, la deuxième unité de conversion de puissance (12) de telle sorte qu'une tension de la batterie de stockage (13) soit maintenue à une valeur constante.

2. Le système de stockage pompé selon la revendication 1, sachant que le dispositif de commande (4) comprend en outre une unité de commande de régulateur (43),
sachant que dans l'opération de génération de puissance, l'unité de commande de régulateur (43) donne au régulateur (5) une vitesse de rotation d'un rotor du générateur à moteur synchrone (2) et le régulateur (5) règle l'ouverture d'aubes directrices de telle sorte que la vitesse de rotation donnée soit atteinte, et
sachant que dans l'opération de pompage, l'unité de commande de régulateur donne au régulateur (5) une ouverture d'aubes directrices et le régulateur (5) règle l'ouverture d'aubes directrices pour coïncider avec l'ouverture d'aubes directrices donnée.

3. Le système de stockage pompé selon la revendication 1 ou 2, comprenant en outre :
un rectificateur (22) configuré pour générer un courant direct fourni à un enroulement de rotor du générateur à moteur synchrone (2) ; et
une unité de commande de rectificateur (23) configurée pour commander le rectificateur (22) de telle sorte qu'une valeur effective d'une tension de courant alternatif entre le générateur à moteur synchrone (2) et la deuxième unité de conversion de puissance (12) soit maintenue à une valeur constante.
